# EUROPEAN PATENT APPLICATION

(11) **EP 4 804 543 A1**
(43) Date of publication of application: **09.09.2026**
(21) Application number: 24899477.4
(22) Date of filing: 17.10.2024
(51) Int. Cl.: H04N 23/23

(54) **COMBINED INFRARED THERMAL IMAGING PRODUCT AND THERMAL IMAGING OPTIMIZATION METHOD THEREFOR**

(30) Priority: 04.12.2023 CN 202311652252
(71) Applicant: Raytron Technology Co., Ltd., Yantai, Shandong 264006 (CN)
(72) Inventor: JING, Sai, Yantai, Shandong 264006 (CN); ZHANG, Zhonggang, Yantai, Shandong 264006 (CN); LIU, Jigang, Yantai, Shandong 264006 (CN)
(74) Representative: Reiser & Partner Patentanwälte mbB
(86) International application number: PCT/CN2024/125579
(87) International publication number: WO 2025/118833

(57) **Abstract**

Embodiments of the present application provide a combined infrared thermal imaging product and a thermal imaging optimization method therefor. The combined infrared thermal imaging product includes an infrared thermal imager configured to receive infrared light signals and form infrared images, and a laser ranging module comprising a laser emitting module, a laser receiving module, and a calibration signal module. An optical axis of indicator light emitted by the calibration signal module is parallel to an optical axis of laser signals emitted by the laser emitting module. The laser ranging module and the infrared thermal imager are connected via a detachable connection structure, and both are communicatively connected to the same display terminal. The display terminal displays the infrared images captured by the infrared thermal imager when the calibration signal module emits the indicator light toward a target object, and an aiming cursor in the infrared image is adjusted to align with the target object, so as to calibrate the optical axes of the infrared thermal imager and the laser ranging module, thereby enabling the combined infrared thermal imaging product to maintain improved ranging accuracy.

## Description

The present application claims the priority of Chinese Patent Application No. 202311652252.8, filed with the China National Intellectual Property Administration on December 4, 2023, and entitled "Combined Infrared Thermal Imaging Product and Thermal Imaging Optimization Method Therefor," the entire contents of which are incorporated herein by reference.

### TECHNICAL FIELD

The present application relates to the field of optical sighting technology, and more particularly, to a combined infrared thermal imaging apparatus and a thermal imaging optimization method therefor.

### BACKGROUND

With the increasing popularity of portable intelligent terminal devices, users have higher and higher requirements for the functions of such devices. At present, most intelligent terminal devices are not equipped with infrared thermal imaging functionality. However, infrared thermal imaging has the advantage of night vision, and can provide users with a clear field of view under harsh weather, nighttime, and other conditions, thus greatly meeting user demands.

Through research on extending the infrared thermal imaging function to intelligent terminal devices, the inventors of the present application have analyzed and summarized the following situations and deficiencies of known products:
1. Incorporating an infrared thermal imager within an intelligent terminal device poses greater challenges to the lightweight design of such devices and increases design and production costs; furthermore, for users already possessing intelligent terminal devices without built-in infrared thermal imagers, the only means of obtaining night vision functionality is to purchase new devices, resulting in prohibitively high usage costs for users.
2. Known infrared thermal imager products, likewise considering the need for lightweight design, generally do not include ranging functionality; however, in night vision scenarios, the ability to perform ranging is also a widespread user need for achieving clear observation.
3. For some existing infrared thermal imager products, consideration has been given to externally attaching a ranging module to add ranging functionality. However, such infrared thermal imaging products require optical axis calibration to be performed by professional personnel prior to factory shipment, wherein the calibration includes parallel adjustment of the laser ranging optical axis, laser indicating optical axis, and infrared imaging optical axis. During actual use after factory shipment, the user positions the ranging target at the image center point through the thermal imaging display (since the laser indication point is typically fixed at the image center), at which time the laser indicator is not activated. Nevertheless, this approach does not support user-performed calibration; if the device has been used for an extended period, or if the laser ranging module is disassembled and replaced, optical axis deviation may occur, such that the laser indication point may no longer be located at the image center. If calibration is not performed, result deviations readily occur, adversely affecting ranging accuracy, which constitutes an intolerable product defect for users. Furthermore, although such infrared thermal imaging products have an externally mounted ranging module, they are essentially integrated products; for users who merely desire a lightweight infrared thermal imager, such products clearly fail to meet requirements.

### SUMMARY

To solve the existing technical problems in the prior art, the present application provides a combined infrared thermal imaging product and a thermal imaging optimization method therefor, which feature more flexible combination configurations, are capable of serving as accessories for intelligent terminal devices to extend night vision functionality thereof, and support optical axis calibration after factory shipment.

To achieve the above objectives, the technical solutions of the embodiments of the present application are realized as follows:
In a first aspect, an embodiment of the present application provides a combined infrared thermal imaging product, comprising:
an infrared thermal imager, configured to receive infrared light signals to form infrared images;
a laser ranging module, comprising a laser emitting module, a laser receiving module, and a calibration signal module, an optical axis of indicator light emitted by the calibration signal module being parallel to an optical axis of laser signals emitted by the laser emitting module;
wherein the laser ranging module and the infrared thermal imager are connected via a detachable connection structure, the infrared thermal imager and the laser ranging module are both communicatively connected to the same display terminal, the display terminal is configured to display infrared images captured by the infrared thermal imager when the calibration signal module emits the indicator light toward a target object, and an aiming cursor is adjusted to align with the target object in the infrared image, so as to calibrate the optical axes of the infrared thermal imager and the laser ranging module.

In some embodiments, the infrared thermal imager comprises a first housing, an infrared imaging module accommodated within the first housing, and a first detachable connection structure disposed on the first housing, a light incident surface of the infrared imaging module is disposed at a front side of the first housing;
the laser ranging module comprises a second housing and a second detachable connection structure disposed on the second housing, the laser emitting module, the laser receiving module, and the calibration signal module are all disposed at a front side of the second housing; and
the infrared thermal imager and the laser ranging module are connected through the first detachable connection structure and the second detachable connection structure.

In some embodiments, the first detachable connection structure comprises a Picatinny rail provided on a top surface of the first housing, and the second detachable connection structure comprises a snap-fit portion provided on a bottom surface of the second housing and corresponding to a slot on the Picatinny rail.

In some embodiments, the laser ranging module comprises a wireless communication module, and the laser ranging module establishes a wireless communication connection with the display terminal via the wireless communication module.

In some embodiments, the infrared thermal imager comprises a communication interface, and the communication interface establishes a communication connection with the display terminal via a data cable.

In some embodiments, the display terminal is integrally arranged on the infrared thermal imager, and an image processor in the infrared thermal imager is communicatively connected to the display terminal.

In a second aspect, an embodiment of the present application provides a thermal imaging optimization method for a combined infrared thermal imaging product, comprising:
in a calibration mode for optical axis calibration of the combined infrared thermal imaging product, the laser ranging module aiming at a target object and emitting indicator light via the calibration signal module;
the infrared thermal imager correspondingly capturing an infrared image and transmitting the infrared image to a display terminal for display; wherein the infrared image comprises an imaging region of the target object;
the display terminal displaying the infrared image and an aiming cursor on a display interface, moving the aiming cursor to a position on the target object aimed by the indicator light and marking the position according to an adjustment operation on the aiming cursor, thereby completing optical axis calibration of the infrared thermal imager and the laser ranging module; and
in an imaging operation mode of the combined infrared thermal imaging product, the infrared thermal imager acquiring infrared light signals in a target scene to form real-time infrared images, when the calibrated aiming cursor calibrated in the display interface is aimed at a ranging object in the real-time infrared image, the laser ranging module performing ranging to obtain ranging information, and the ranging information being displayed in the real-time infrared image.

In some embodiments, the step of the laser ranging module aiming at a target object and emitting indicator light via the calibration signal module comprises:
the laser ranging module activating a Bluetooth function to complete Bluetooth pairing connection with the display terminal; and
the display terminal, based on an operation on an indicator light emission button in the display interface, transmitting a corresponding control instruction to the laser ranging module through Bluetooth communication to control the calibration signal module to emit indicator light.

In some embodiments, the step of the laser ranging module performing ranging to obtain ranging information and displaying the ranging information in the real-time infrared image comprises:
the display terminal, based on an operation on a ranging control button in the display interface, transmitting a corresponding ranging instruction to the laser ranging module through Bluetooth communication to control the laser emitting module to emit a laser signal;
the laser receiving module receiving a reflected laser signal; and
the laser ranging module calculating and obtaining ranging information based on emission and reception of the laser signal, and transmitting the ranging information to the display terminal through Bluetooth communication, wherein the display terminal displays the ranging information in the real-time infrared image.

In some embodiments, the imaging operation mode is a default mode of the combined infrared thermal imaging product, and the method further comprises:
the display terminal entering the calibration mode from the imaging operation mode based on an operation on a calibration mode button in the display interface.

In some embodiments, the target object is a reference heat source object selected within a human-eye observation range.

The combined infrared thermal imaging product provided by the above embodiments employs a detachable connection structure between the laser ranging module and the infrared thermal imager, and both are communicatively connectable to a same display terminal. The laser ranging module is provided with a calibration signal module, and the optical axis of indicator light emitted by the calibration signal module is parallel to the optical axis of the laser signal emitted by the laser emitting module. In this manner, the laser ranging module and the infrared thermal imager may be combined and then jointly mounted to a same display terminal. By utilizing the infrared image captured by the infrared thermal imager when the calibration signal module emits indicator light, the position of the aiming cursor in the infrared image is maintained consistent with the position illuminated by the indicator light emitted from the calibration signal module, thereby achieving optical axis calibration between the infrared thermal imager and the laser ranging module. Such a combined infrared thermal imaging product, first, supports users to selectively install the product according to the need for extended night vision functionality, and also supports users to optionally add the laser ranging module according to whether ranging functionality is currently required, thus providing flexible combination configurations and serving as an accessory for intelligent terminal devices to conveniently extend night vision functionality with or without ranging capability. Second, the provision of the calibration signal module in the laser ranging module enables users to perform optical axis calibration on the display terminal based on the infrared image captured under the indicator light emitted by the calibration signal module. For usage scenarios where the combined infrared thermal imaging product is accessorized to an intelligent terminal device, users may perform optical axis calibration by themselves after each new assembly of the infrared thermal imager and the laser ranging module, or perform coaxial inspection of the optical axis after a certain period of use, thereby enabling the combined infrared thermal imaging product to consistently maintain superior ranging accuracy.

In the above embodiments, the thermal imaging optimization method for the combined infrared thermal imaging product and the corresponding product embodiments share the same inventive concept, and therefore respectively achieve the same technical effects as the corresponding product embodiments, which will not be repeated herein. Furthermore, in the thermal imaging optimization method, after completing optical axis calibration between the infrared thermal imager and the laser ranging module of the combined infrared thermal imaging product, in the imaging operation mode of the combined infrared thermal imaging product, any ranging object within the imaging range of the real-time infrared image may be directly targeted using the aiming cursor in the real-time infrared image, thereby ensuring accurate distance measurement of the ranging object by the laser ranging module, with simple operation and convenient usage.

### BRIEF DESCRIPTION OF THE DRAWINGS

FIG. 1 is a schematic diagram of an application scenario of a combined infrared thermal imaging product according to one embodiment;
FIG. 2 is a schematic diagram of an application scenario of a combined infrared thermal imaging product according to another embodiment;
FIG. 3 is a structural schematic diagram of a combined infrared thermal imaging product according to one embodiment;
FIG. 4 is a structural schematic diagram of the combined infrared thermal imaging product shown in FIG. 3 from another angle;
FIG. 5 is another structural schematic diagram of the combined infrared thermal imaging product shown in FIG. 3;
FIG. 6 is a flowchart of a thermal imaging optimization method for a combined infrared thermal imaging product according to one embodiment.

### LIST OF REFERENCE NUMERALS

Intelligent terminal device 10; display terminal 11; infrared thermal imager 21, 21'; first housing 211; infrared imaging module 212; laser ranging module 22; second housing 221; laser emitting module 221; laser receiving module 222; calibration signal module 223; detachable connection structure 23; first detachable connection structure 231; second detachable connection structure 232.

### DESCRIPTION OF THE EMBODIMENTS

The technical solutions of the present application are further described in detail below with reference to the accompanying drawings and specific embodiments.

In order to make the objectives, technical solutions, and advantages of the present application clearer, the present application will be further described in detail below with reference to the accompanying drawings. The described embodiments should not be regarded as limiting the present application. All other embodiments obtained by a person of ordinary skill in the art without making creative efforts fall within the scope of protection of the present application.

In the following description, references to "some embodiments" describe a subset of all possible embodiments. It should be noted that "some embodiments" may be the same subset or different subsets of all possible embodiments, and may be combined with each other without conflict.

In the following description, the terms "first", "second", and "third" are merely used to distinguish similar objects and do not denote a specific order for the objects. It will be understood that, where allowed, the specific order or sequence of "first", "second", and "third" may be interchanged so that the embodiments of the present application described herein can be implemented in an order other than that illustrated or described herein.

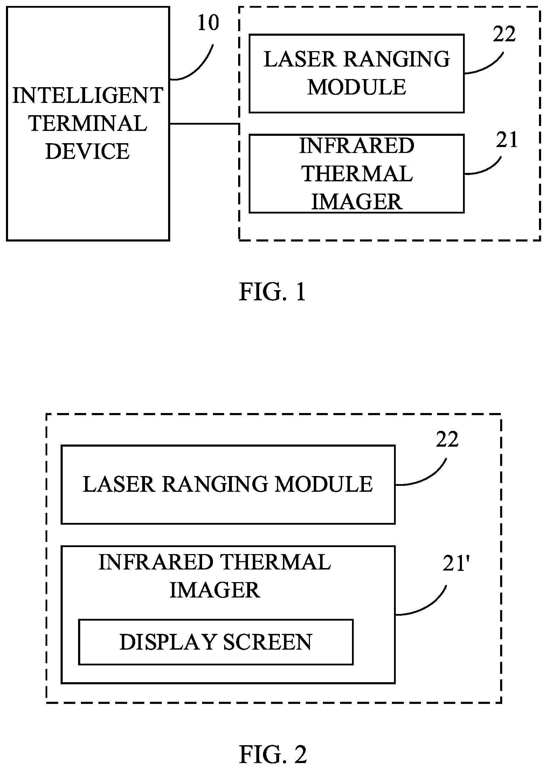

FIG. 1 is a schematic diagram of an optional application scenario of a combined infrared thermal imaging product according to an embodiment of the present application. The combined infrared thermal imaging product can serve as an optional accessory for an intelligent terminal device 10 and can be assembled to the intelligent terminal device 10 as needed, thereby extending the night vision function with distance measurement capability for the intelligent terminal device 10. The intelligent terminal device 10 may be various portable screen-equipped intelligent devices having storage and computing capabilities, such as a smartphone or a tablet. Taking the case where the intelligent terminal device 10 is a mobile phone as an example, a user can choose to add the combined infrared thermal imaging product provided by the embodiments of the present application to the mobile phone, thereby extending the night vision function for the mobile phone. The combined infrared thermal imaging product includes an infrared thermal imager 21 and a laser ranging module 22 that are detachably connected. The infrared thermal imager 21 and the laser ranging module 22 are two separate and independent components. They are assembled and combined via a detachable connection structure to form the combined infrared thermal imaging product. The infrared thermal imager 21 and the laser ranging module 22 are respectively communicatively connected to the intelligent terminal device 10. The laser ranging module 22 is provided with a calibration signal module. Thus, on the intelligent terminal device 10 side, the user can, using the infrared image captured by the infrared thermal imager 21 when the calibration signal module emits an indicator light toward a target object, adjust an aiming cursor to align with the target object in the infrared image, thereby calibrating the optical axes of the infrared thermal imager 21 and the laser ranging module 22. This enables the combined infrared thermal imaging product to provide the user with a simple and convenient optical axis calibration function.

It should be noted that in some application scenarios, the combined infrared thermal imaging product is not necessarily limited to being an accessory for an intelligent terminal device to conveniently extend the night vision function of the intelligent terminal. Instead, it may refer to a combined infrared thermal imaging product formed by adding a laser ranging module to a known infrared thermal imager. Referring to FIG. 2, an infrared thermal imager 21' itself includes a display screen, i.e., the infrared thermal imager 21' itself serves as the display terminal. The laser ranging module 22 is assembled and combined with the infrared thermal imager 21' via a detachable connection structure. During calibration, the laser ranging module 22 emits an indicator light toward a target object through the calibration signal module. At this time, the infrared thermal imager 21' captures an infrared image and displays it on the display screen. The user can adjust the aiming cursor to align with the target object in the infrared image, thereby calibrating the optical axes of the infrared thermal imager 21' and the laser ranging module 22. This enables the combined infrared thermal imaging product to provide the user with a simple and convenient optical axis calibration function.

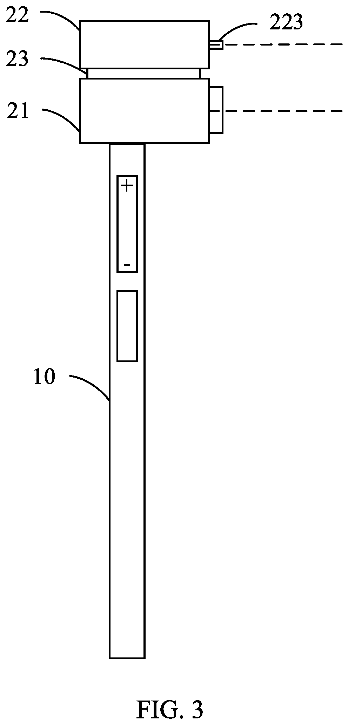

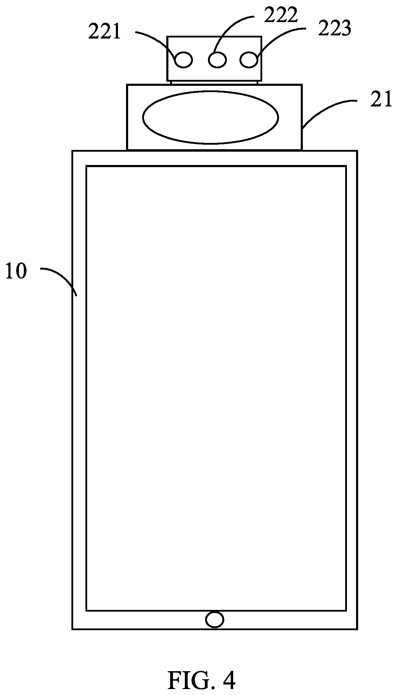

FIG. 3, FIG. 4, and FIG. 5 are structural schematic diagrams of a combined infrared thermal imaging product according to an embodiment of the present application. The combined infrared thermal imaging product includes: an infrared thermal imager 21, configured to receive infrared light signals to form infrared images; a laser ranging module 22, comprising a laser emitting module 221, a laser receiving module 222, and a calibration signal module 223, an optical axis of indicator light emitted by the calibration signal module 223 is parallel to an optical axis of laser signals emitted by the laser emitting module 221. The laser ranging module 22 and the infrared thermal imager 21 are connected via a detachable connection structure 23; the infrared thermal imager 21 and the laser ranging module 22 are both communicatively connected to the same display terminal 11; the display terminal 11 is configured to display the infrared image captured by the infrared thermal imager when the calibration signal module 223 emits the indicator light toward a target object; and an aiming cursor is adjusted to align with the target object in the infrared image, so as to calibrate the optical axes of the infrared thermal imager 21 and the laser ranging module 22.

Here, the infrared thermal imager 21 and the laser ranging module 22 are two separate and independent components, assembled and combined via the detachable connection structure 23. The display terminal 11 may refer to an application program terminal that cooperates with the combined infrared thermal imaging product to realize the night vision function with distance measurement capability, or may refer to the intelligent terminal device 10 to which the combined infrared thermal imaging product is attached, where the intelligent terminal device 10 is loaded with an application program that cooperates with the combined infrared thermal imaging product to realize the night vision function with distance measurement capability.

The calibration signal module 223 is a light-emitting module capable of emitting indicator light. Optionally, the calibration signal module 223 is a laser indicator module capable of emitting visible laser signals. The laser emitting module 221 is configured to emit a non-visible laser signals toward a distance measuring object when the laser ranging module performs distance measurement. The laser receiving module 222 is configured to receive the laser signals reflected from the distance measuring object. The laser ranging module 22 performs distance calculation for the distance measuring object based on the emission and reception of the laser signals.

In the above embodiments, the laser ranging module 22 and the infrared thermal imager 21 may be combined and then jointly assembled to the same display terminal 11. By utilizing the infrared image captured by the infrared thermal imager 21 when the calibration signal module 223 emits the indicator light, and ensuring that the position of the aiming cursor in the infrared image coincides with the position where the indicator light emitted by the calibration signal module 223 is directed toward the target object, calibration of the optical axes of the infrared thermal imager 21 and the laser ranging module 22 is achieved. Such a combined infrared thermal imaging product, first, supports users to selectively install the product according to the need for extended night vision functionality, and also supports users to optionally add the laser ranging module according to whether ranging functionality is currently required, thus providing flexible combination configurations and serving as an accessory for the intelligent terminal device 10 to conveniently extend night vision functionality with or without ranging capability for the intelligent terminal device 10. Secondly, the provision of the calibration signal module 223 in the laser ranging module 22 enables the user to perform optical axis calibration on the display terminal 11 based on the infrared image captured under the indicator light emitted by the calibration signal module 223. For usage scenarios where the combined infrared thermal imaging product is added as an accessory to the intelligent terminal device 10, the user can perform optical axis calibration by themselves each time after a new combined assembly of the infrared thermal imager 21 and the laser ranging module 22, or can check the coaxiality of the optical axes after a period of use, so that the combined infrared thermal imaging product can always maintain better ranging accuracy.

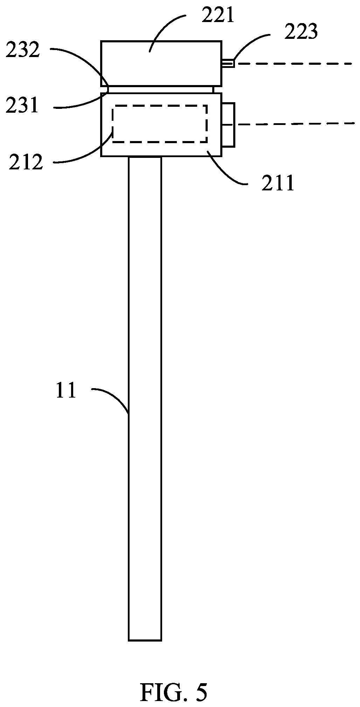

In some embodiments, referring to FIG. 5, the infrared thermal imager 21 includes a first housing 211, an infrared imaging module 212 accommodated in the first housing 211, and a first detachable connection structure 231 disposed on the first housing 211. A light incident surface of the infrared imaging module 212 is arranged on a front side of the first housing 211. The laser ranging module 22 includes a second housing 221 and a second detachable connection structure 232 disposed on the second housing 221. The laser emitting module 221, the laser receiving module 222, and the calibration signal module 223 are all arranged on a front side of the second housing 221. The infrared thermal imager 21 and the laser ranging module 22 are connected via the first detachable connection structure 231 and the second detachable connection structure 232. The infrared imaging module 212 includes an infrared objective lens assembly and an infrared core module. The infrared objective lens assembly is disposed on the light incident surface side of the infrared thermal imager 21 for receiving infrared light signals from a target scene, so that the infrared light signals converge toward an infrared detector in the infrared core module, and the infrared detector converts the infrared light signals into electrical signals for forming an infrared image. Optionally, the front side of the first housing 211 is provided with a window for incidence of the infrared light signal, and the infrared objective lens assembly is disposed at a position corresponding to the window. The shape and dimensions of the mutually connecting side surfaces of the first housing 211 of the infrared thermal imager 21 and the second housing 221 of the laser ranging module 22 are substantially identical. After assembly, the laser ranging module 22 and the infrared thermal imager 21 are in a stacked configuration. The laser emitting module 221, the laser receiving module 222, and the calibration signal module 223 may be arranged on the front side of the second housing of the laser ranging module 22. The infrared thermal imager 21 and the laser ranging module 22 are each encapsulated by the first housing 211 and the second housing 221, respectively, to form independent product modules, facilitating users to select and assemble different product modules according to their own needs, facilitating disassembly and portable carrying, and enabling reassembly when needed.

Optionally, the first detachable connection structure 231 includes a Picatinny rail provided on the top surface of the first housing 211, and the second detachable connection structure 232 includes a snap-fit portion provided on the bottom surface of the second housing 221 and corresponding to a slot on the Picatinny rail. The Picatinny rail includes a guide rail and a locking member, which can serve as an accessory mounting platform for stable assembly of other accessories, such as the laser ranging module 22 in this embodiment. The Picatinny rail includes a guide rail provided with slots, and the locking member is pre-connected to the guide rail for fixing the Picatinny rail to the main body providing accessory mounting, such as the first housing 211 of the infrared thermal imager 21 in this embodiment.

In some embodiments, the laser ranging module 22 includes a wireless communication module, and the laser ranging module 22 establishes a wireless communication connection with the display terminal 11 via the wireless communication module. The wireless communication module may be a known standard wireless communication module, such as a Bluetooth module, a Wi-Fi module, or the like. The laser ranging module 22 establishes a wireless communication connection with the display terminal 11 to perform data communication with the display terminal 11, which can support the user to control its distance measurement by operating the display terminal 11, transmit captured distance information to the display terminal 11 for display, etc.

In some embodiments, the infrared thermal imager 21 includes a communication interface, and the communication interface establishes a communication connection with the display terminal 11 via a data cable. The infrared thermal imager 21 and the display terminal 11 are in communication connection using a data cable. The communication interface may be a known standard communication interface type, such as a USB interface, a Type-C interface, etc., which can be compatible with the data interface types of the infrared thermal imager 21 and mainstream intelligent terminal devices. The infrared thermal imager 21 transmits the real-time captured infrared image data using a data cable, which helps ensure the transmission efficiency and stability of image data. It should be noted that the communication connection manner between the infrared thermal imager 21 and the laser ranging module 22 and the display terminal 11 is not limited to the foregoing embodiments. For example, the infrared thermal imager 21 may establish a communication connection with the display terminal 11 through a wireless communication module, while the laser ranging module 22 may establish a communication connection with the display terminal 11 through a data cable; or both may adopt wireless or wired communication connection.

In addition, in the embodiment where the display terminal 11 is integrally arranged on the infrared thermal imager 21' (as shown in FIG. 2), the display terminal 11 may be disposed on one side of the first housing of the infrared thermal imager 21'. The infrared thermal imager 21' is internally provided with an image processor connected to the infrared detector for receiving electrical signals converted from infrared light signals by the infrared detector and performing imaging processing. The display terminal 11 and the image processor in the infrared thermal imager 21' are communicatively connected via a data cable.

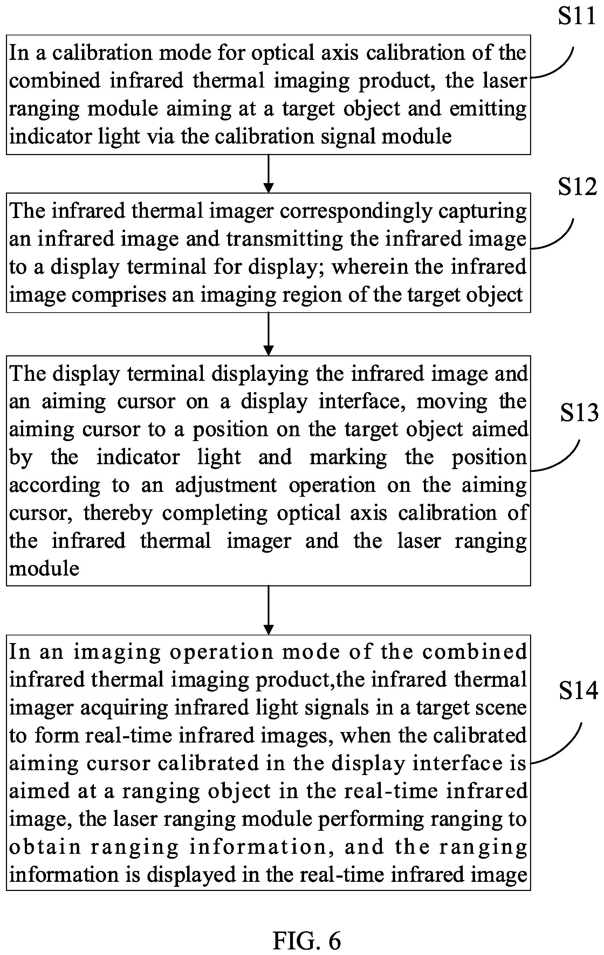

Referring to FIG. 6, in another aspect, the present application provides a thermal imaging optimization method for a combined infrared thermal imaging product, where the combined infrared thermal imaging product is the combined thermal imaging product according to the foregoing embodiments. First, the modular thermal imaging product is connected to the display terminal 11, the infrared thermal imager and the display terminal 11 are powered on, and the thermal imager APP on the display terminal 11 is opened to ensure that the infrared thermal imager can operate normally and output images. The thermal imaging optimization method includes the following steps.

S11: in a calibration mode for optical axis calibration of the combined infrared thermal imaging product, the laser ranging module aims at a target object and emits indicator light via the calibration signal module.

The combined infrared thermal imaging product may provide users with optical axis calibration of the laser ranging module and the infrared thermal imager, and is not limited to factory calibration before connecting and fixing the two. During the calibration process, the laser ranging module is controlled to aim at a target object and emit an indicator light through the calibration signal module. Since the indicator light is a visible light signal, in order to more clearly display the image of the selected target object in the corresponding captured infrared image, a reference heat source object may be selected as the target object within the human-eye observation range and the indicator light is kept directed toward the target object. That is, the target object is a reference heat source object selected within the human-eye observation range.

S12: the infrared thermal imager correspondingly captures an infrared image and transmits the infrared image to a display terminal for display, wherein the infrared image comprises an imaging region of the target object.

While maintaining the indicator light directed toward the target object, the corresponding infrared image is captured by the infrared thermal imager and displayed in the interface of the display terminal.

S13: the display terminal displays the infrared image and an aiming cursor on a display interface, moving the aiming cursor to a position on the target object aimed by the indicator light and marking the position according to an adjustment operation on the aiming cursor, thereby completing optical axis calibration of the infrared thermal imager and the laser ranging module.

The aiming cursor on the thermal imager APP is activated, and an initial position of the aiming cursor appears in the interface of the display terminal. The aiming cursor is displayed on the display interface and may be moved up, down, left, and right, or may be fixed. At this time, the user may operate to move the aiming cursor within the infrared image so that the position of the aiming cursor in the imaging region of the target object in the infrared image coincides with the position where the indicator light is directed toward the target object. The position of the aiming optical axis at this time is recorded for calibration, ensuring that the aiming cursor position remains unchanged the next time the infrared thermal imager is turned on. At this point, optical axis calibration of the infrared thermal imager and the laser ranging module is completed, and the calibration mode may be exited. For example, the calibration signal module is aimed at the earlobe portion of a human head and emit the indicator light through the calibration signal module, while the infrared thermal imager captures an infrared image of the head and displays it in real time on the display interface. Meanwhile, the user may move the aiming cursor on the display interface to the ear lobe imaging position in the infrared image of the head, and click to confirm and record the current position of the aiming cursor. At this point, the aiming cursor is considered to be aligned with the target object, and the aiming cursor can be used as a reticle for aiming at any object requiring distance measurement in the real-time infrared image during subsequent infrared observation.

S14: in an imaging operation mode of the combined infrared thermal imaging product, the infrared thermal imager acquires infrared light signals in a target scene to form real-time infrared images, when the calibrated aiming cursor calibrated in the display interface is aimed at a ranging object in the real-time infrared image, the laser ranging module performs ranging to obtain ranging information, and the ranging information is displayed in the real-time infrared image.

After calibration is completed, the combined infrared thermal imaging product, in a normal imaging operation mode, the combined infrared thermal imaging product captures a real-time infrared image of the target scene to be observed in real time through the infrared thermal imager, and sends the real-time infrared image to the display terminal for display. At this time, the user may observe the real-time infrared image on the display interface to find whether there is any object requiring distance measurement. It is only necessary to align the calibrated aiming cursor in the display interface with the ranging object, and then control the laser ranging module to perform ranging to obtain ranging information. The laser ranging module sends the obtained distance information to the display terminal for synchronous display with the real-time infrared image. It should be noted that in the imaging operation mode of the combined infrared thermal imaging product, the user can select the object requiring distance measurement in the real-time infrared image displayed on the display interface. At this time, the calibration signal module emitting the indicator light is turned off and no longer needs to emit visible indicator light to the outside, while the laser signal used for distance measurement is non-visible. The distance measurement performed by the laser ranging module does not cause any interference to the imaging of the target scene, nor does it disturb or interfere with the target object (e.g., an animal).

It should be noted that in the combined infrared thermal imaging product, the infrared thermal imager and the laser ranging module are detachably connected. When the user does not need the distance measurement function, the laser ranging module may be removed, and the user may install only the infrared thermal imager on the intelligent terminal device to extend night vision function. When the user needs the distance measurement function, the laser ranging module may be installed again. In this case, the laser ranging module and the infrared thermal imager are reassembled, and the optical axes of the laser ranging module and the infrared thermal imager need to be calibrated once before switching to the normal imaging operation mode to realize the night vision function with distance measurement on the intelligent terminal device.

In some embodiments, the step of the laser ranging module aiming at a target object and emitting indicator light via the calibration signal module comprises:
the laser ranging module activating a Bluetooth function to complete Bluetooth pairing connection with the display terminal; and
the display terminal, based on an operation on an indicator light emission button in the display interface, transmitting a corresponding control instruction to the laser ranging module through Bluetooth communication to control the calibration signal module to emit indicator light.

In this embodiment, the laser ranging module and the display terminal are connected via Bluetooth. After the laser ranging module is activated, the Bluetooth module emits a Bluetooth signal. The display terminal searches for the Bluetooth signal and automatically completes the Bluetooth pairing connection. Before performing calibration, the laser ranging module and the infrared thermal imager are first combined together, and then the whole assembly is mounted on one side of the display terminal via a connecting bracket or other structure. The infrared thermal imager is connected to the display terminal via a data cable, and the laser ranging module is connected to the display terminal via Bluetooth by automatic Bluetooth pairing. After the laser ranging module establishes a Bluetooth connection with the display terminal, during subsequent calibration or normal use, the user can control the laser ranging module by operating on the display interface of the display terminal. For example, the display interface of the display terminal is provided with an indicator light emission button. The user can click the indicator light emission button to control the calibration signal module of the laser ranging module to emit the indicator light, which is more convenient for user operation and eliminates the need to provide corresponding operation buttons on the laser ranging module.

In some embodiments, the step of the laser ranging module performing ranging to obtain ranging information and displaying the ranging information in the real-time infrared image comprises:
the display terminal, based on an operation on a ranging control button in the display interface, transmitting a corresponding ranging instruction to the laser ranging module through Bluetooth communication to control the laser emitting module to emit a laser signal;
the laser receiving module receiving a reflected laser signal; and
the laser ranging module calculating and obtaining ranging information based on emission and reception of the laser signal, and transmitting the ranging information to the display terminal through Bluetooth communication, wherein the display terminal displays the ranging information in the real-time infrared image.

In this embodiment, the display interface of the display terminal is provided with a ranging control button. The user may click the ranging control button to control the laser emitting module of the laser ranging module to emit a laser signal for distance measurement. While viewing the real-time infrared image on the display interface, the user can select the distance measuring object using the aiming cursor, and then directly click the ranging control button on the display interface to control the laser ranging module to obtain distance information, which is more convenient for user operation and eliminates the need to provide corresponding operation buttons on the laser ranging module.

In some embodiments, the imaging operation mode is a default mode of the combined infrared thermal imaging product, and the method further comprises:
the display terminal entering the calibration mode from the imaging operation mode based on an operation on a calibration mode button in the display interface.

The timing for calibrating the optical axes of the infrared thermal imager and the laser ranging module can be determined by the user according to actual application requirements. A calibration mode button is provided on the display interface. When the user considers that calibration of the optical axes is needed, the user may click the calibration mode button on the display interface to start calibration. After entering the calibration mode, the user's operation to move the aiming cursor on the display interface becomes effective, and the movement of the aiming cursor on the display interface can be recalibrated so that the position of the aiming cursor on the display interface can indicate the optical axis pointing direction of the laser ranging module. When the user does not start calibration, after the combined thermal imaging product is turned on, it enters the default imaging operation mode. In this mode, movement of the aiming cursor is blocked, and various user operations on the display interface will not change the position of the aiming cursor on the display interface, thereby avoiding accidental touch operations and ensuring that the imaging operation mode is not disturbed.

It should be noted that, as used herein, the terms "comprise", "include", or any other variation thereof, are intended to cover a non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a ..." does not exclude the presence of another identical element in the process, method, article, or apparatus that comprises the element.

From the description of the above embodiments, those skilled in the art can clearly understand that the methods of the above embodiments can be implemented by means of software plus a necessary general hardware platform, and certainly can also be implemented by hardware, but in many cases the former is a better implementation. Based on such understanding, the technical solution of the present invention, essentially or the part contributing to the prior art, may be embodied in the form of a software product. The computer software product is stored in a storage medium (such as ROM/RAM, magnetic disk, optical disk) and includes several instructions for causing a terminal (which may be a mobile phone, computer, server, or network device, etc.) to execute the methods described in the various embodiments of the present invention.

The above description is merely specific embodiments of the present application. However, the scope of protection of the present application is not limited thereto. Any person skilled in the art could readily conceive of variations or substitutions within the technical scope disclosed by the present application, which shall all be encompassed within the scope of protection of the present application. Therefore, the scope of protection of the present application shall be subject to the scope of protection of the claims.

## Claims

1. A combined infrared thermal imaging product, **characterized by** comprising:
an infrared thermal imager (21), configured to receive infrared light signals to form infrared images;
a laser ranging module (22), comprising a laser emitting module (221), a laser receiving module (222), and a calibration signal module (223), an optical axis of indicator light emitted by the calibration signal module (223) being parallel to an optical axis of laser signals emitted by the laser emitting module (221);
wherein the laser ranging module (22) and the infrared thermal imager (21) are connected via a detachable connection structure (23), the infrared thermal imager (21) and the laser ranging module (22) are both communicatively connected to the same display terminal (11), the display terminal (11) is configured to display infrared images captured by the infrared thermal imager (21) when the calibration signal module (223) emits the indicator light toward a target object, and an aiming cursor is adjusted to align with the target object in the infrared image, so as to calibrate the optical axes of the infrared thermal imager (21) and the laser ranging module (22).

2. The combined infrared thermal imaging product according to claim 1, **characterized in that** the infrared thermal imager (21) comprises a first housing (211), an infrared imaging module (212) accommodated within the first housing (211), and a first detachable connection structure (231) disposed on the first housing (211), a light incident surface of the infrared imaging module (212) is disposed at a front side of the first housing (211);
the laser ranging module (22) comprises a second housing (221) and a second detachable connection structure (232) disposed on the second housing (221), the laser emitting module (221), the laser receiving module (222), and the calibration signal module (223) are all disposed at a front side of the second housing (221); and
the infrared thermal imager (21) and the laser ranging module (22) are connected through the first detachable connection structure (231) and the second detachable connection structure (232).

3. The combined infrared thermal imaging product according to claim 2, **characterized in that** the first detachable connection structure (231) comprises a Picatinny rail provided on a top surface of the first housing (211), and the second detachable connection structure (232) comprises a snap-fit portion provided on a bottom surface of the second housing (221) and corresponding to a slot on the Picatinny rail.

4. The combined infrared thermal imaging product according to claim 1, **characterized in that** the laser ranging module (22) comprises a wireless communication module, and the laser ranging module (22) establishes a wireless communication connection with the display terminal (11) via the wireless communication module.

5. The combined infrared thermal imaging product according to claim 1, **characterized in that** the infrared thermal imager (21) comprises a communication interface, and the communication interface establishes a communication connection with the display terminal (11) via a data cable.

6. The combined infrared thermal imaging product according to claim 1, **characterized in that** the display terminal (11) is integrally arranged on the infrared thermal imager (21), and an image processor in the infrared thermal imager (21) is communicatively connected to the display terminal (11).

7. A thermal imaging optimization method for the combined infrared thermal imaging product according to any one of claims 1 to 6, **characterized by** comprising:
in a calibration mode for optical axis calibration of the combined infrared thermal imaging product, the laser ranging module aiming at a target object and emitting indicator light via the calibration signal module;
the infrared thermal imager correspondingly capturing an infrared image and transmitting the infrared image to a display terminal for display; wherein the infrared image comprises an imaging region of the target object;
the display terminal displaying the infrared image and an aiming cursor on a display interface, moving the aiming cursor to a position on the target object aimed by the indicator light and marking the position according to an adjustment operation on the aiming cursor, thereby completing optical axis calibration of the infrared thermal imager and the laser ranging module; and
in an imaging operation mode of the combined infrared thermal imaging product, the infrared thermal imager acquiring infrared light signals in a target scene to form real-time infrared images, when the calibrated aiming cursor calibrated in the display interface is aimed at a ranging object in the real-time infrared image, the laser ranging module performing ranging to obtain ranging information, and the ranging information being displayed in the real-time infrared image.

8. The thermal imaging optimization method according to claim 7, **characterized in that** the step of the laser ranging module aiming at a target object and emitting indicator light via the calibration signal module comprises:
the laser ranging module activating a Bluetooth function to complete Bluetooth pairing connection with the display terminal; and
the display terminal, based on an operation on an indicator light emission button in the display interface, transmitting a corresponding control instruction to the laser ranging module through Bluetooth communication to control the calibration signal module to emit indicator light.

9. The thermal imaging optimization method according to claim 8, **characterized in that** the step of the laser ranging module performing ranging to obtain ranging information and displaying the ranging information in the real-time infrared image comprises:
the display terminal, based on an operation on a ranging control button in the display interface, transmitting a corresponding ranging instruction to the laser ranging module through Bluetooth communication to control the laser emitting module to emit a laser signal;
the laser receiving module receiving a reflected laser signal; and
the laser ranging module calculating and obtaining ranging information based on emission and reception of the laser signal, and transmitting the ranging information to the display terminal through Bluetooth communication, wherein the display terminal displays the ranging information in the real-time infrared image.

10. The thermal imaging optimization method according to claim 7, **characterized in that** the imaging operation mode is a default mode of the combined infrared thermal imaging product, and the method further comprises:
the display terminal entering the calibration mode from the imaging operation mode based on an operation on a calibration mode button in the display interface.

11. The thermal imaging optimization method according to claim 7, **characterized in that** the target object is a reference heat source object selected within a human-eye observation range.
